# EUROPEAN PATENT APPLICATION

(11) **EP 1 191 423 A2**
(43) Date of publication of application: **27.03.2002**
(21) Application number: 01500156.3
(22) Date of filing: 26.06.2001
(51) Int. Cl.: G06F 1/00

(54) **Integrated circuit with cryptographic capabilities**

(30) Priority: 25.09.2000 ES 200002305
(71) Applicant: Telesincro S.A., 8290 Cerdanyola del Vallès (Barcelona) (ES)
(72) Inventor: Gamell i Andreu, Josep, 08024 Barcelona (ES)
(74) Representative: Curell Aguilà, Marcelino

(57) **Abstract**

An integrated circuit comprising at least one microprocessor, an external connection interface, a data bus, an external address bus, a battery or dry cell supported data RAM (SRAM), a ROM containing at least one program and public keys, where at least part of said program is a cryptographic algorithm operating with the public keys contained in said ROM and at least one additional circuit with predefined functionalities. One application of this printed circuit is in the production of security modules, for example, for data terminals.

## Description

The invention relates to an integrated circuit comprising at least one microprocessor, an external connection interface, a data bus, an external address bus and at least one additional circuit with predefined functionalities.

Integrated circuits of the above named type are known and are used in a plurality of applications. A frequent application is in data terminals which almost always comprise secret keys and data which have to be protected from being known by unauthorized persons. There is a need to protect these integrated circuits from the point of view of both hardware and software, to prevent unauthorized persons from having access to such confidential information.

It is, nevertheless, simultaneously desirable that an authorized person may have access to said information, as well as to the software being executed, with the possibility likewise of modifying and/or replacing it.

It is an object of the invention to overcome these drawbacks. A further object of the invention is an integrated circuit capable of performing a plurality of functions. This object is achieved by an integrated circuit of the type first mentioned above comprising, additionally, a battery or dry cell supported data RAM, a ROM containing at least one program and public keys, where at least part of the program is a cryptographic algorithm operating with the public keys contained in the ROM.

In fact, the battery or dry cell supported RAM allows the information contained therein to be preserved, even in case of an interruption of the main supply.

Additionally, the inclusion of a cryptographic algorithm and of the public keys allows the access of unauthorized personnel to be prevented, on the one hand, while allowing access to authorized personnel, on the other hand. Only the authorized personnel may thus install and execute programs which must be authenticated by a private key corresponding to one or another of the public keys. This is of particular importance, since the information stored in the RAM and in the ROM would be completely unprotected if an unauthorized person were capable of loading an application which were limited to exporting (through a USB serial channel, for example) all the information stored in the RAM or in the ROM. To prevent the loading of programs of this nature, it has been contemplated that a certain number of public keys and the calculation algorithms required for the use of such keys should be stored in the internal ROM of the hardware. It is also possible to store a certain number of public keys in the RAM, although it is preferred to store symmetric or asymmetric private keys in the RAM.

As the man of the art knows, the asymmetric or public key cryptography system uses two keys: one key for encrypting the message and the other for decrypting it. Each user has two keys: the private key and the public key. The user freely discloses the public key. Both keys, the private key and the public key, are mathematically related in such a way that the data encrypted with one key may only be decrypted with the other key.

Every time the execution of an application program is to be initialized, the "digital signature" mechanism is used to guarantee the integrity and authenticity of such program. The integrity is guaranteed by a compendium or extract of the program obtained by a one-way cryptographic function, i.e., which may not be reversed (Hash). The authenticity is guaranteed by encrypting the compendium of the program with the private key of the program creator, which is known as the "digital signature".

The digital signature is added to the original program and is sent to the integrated circuit, the integrated circuit decrypts the digital signature with the public key paired with the private key and extracts the compendium received and saves it. Thereafter, with its own means, it calculates the compendium of the original program received and compares it with the compendium extracted from the digital signature. Both compendiums must be exactly the same, otherwise the program is rejected.

If everything is correct, the integrated circuit saves the original program to the memory together with the digital signature received and the process described in the program loading is repeated integrally each time the program is to be executed.

The process clearly prevents any change in the program, both in the process of loading it when the program may circulate on data networks of public use and is, therefore, susceptible of manipulation, and an attempt to modify it once installed in the hardware, where anyone might try to manipulate the memory used as support.

The private key for obtaining the digital signature is known solely and exclusively to expressly authorized personnel and, therefore, only said expressly authorized personnel may "sign" a program to be loaded into the hardware. The digital signature also includes therein other elements allowing the origin of the program to be identified in an authentic fashion in case of conflict: date of production, identification of origin, program version, etc.

The RAM is preferably provided with a fast erase circuit and at least one attack detector. The fast erase circuit is supplied, like the RAM, from the main supply and from the battery or dry cell, and is provided with an input pin (ATTACK) which, when activated, triggers a process of erasure of the entire RAM. The input pin (ATTACK) may be activated by various sensors, such as for example, a protective mesh against trepanation attempts, like the one disclosed in ES-9502196, a temperature sensor for attempts at freezing, etc., as well as by more than one of said sensors at the same time. The erase process is based on the frequency of a quartz crystal, which is also supplied from two sources.

The data bus and the external address bus are preferably disconnected from the corresponding internal buses when the microprocessor is acceding to the internal ROM and/or RAM. In this way the security and non-violability of the circuit are increased, since the confidential data of the RAM and the ROM are thus totally inaccessible.

The integrated circuit is advantageously provided with certain additional circuits such as, for example, a calculation accelerator (HASH), memory management unit (MMU), direct memory access controller (DMA), interrupt controller (IC), analog to digital converter (ADC), digital to analog converter (DAC), pulse width control wave generator (PWM), real time clock (RTC), timer (Timer 1, Timer 2), software supervisory timer (WD timer), universal asynchronous serial communication channel (UART), synchronous communications channel (HDLC), magnetic card reader (MCR), smart card read/write interface (SCI) two-way serial-parallel converter for synchronous serial communications (SPI), two wire two-way serial interface (I2C), clock frequency generator (PLL), and circuit supply controller, with supply break detection.

The memory management unit is also advantageously capable of dividing the entire terminal storage capacity (both the RAM and the ROM and any possible external stores) into an unlimited number of divisions, in such a way than when a particular program is being executed in one of said divisions, the remaining divisions are completely inaccessible.

The integrated circuit is preferably provided with a smart card rear/write interface (SCI) capable of supporting up to 5 cards simultaneously.

A preferred application of a circuit according to the invention is for making a security module, particularly for data terminals.

Further advantages and features of the invention will become evident from the following description, wherein there is related without any limiting nature a preferred embodiment of the invention, with reference to the attached drawing, in which:

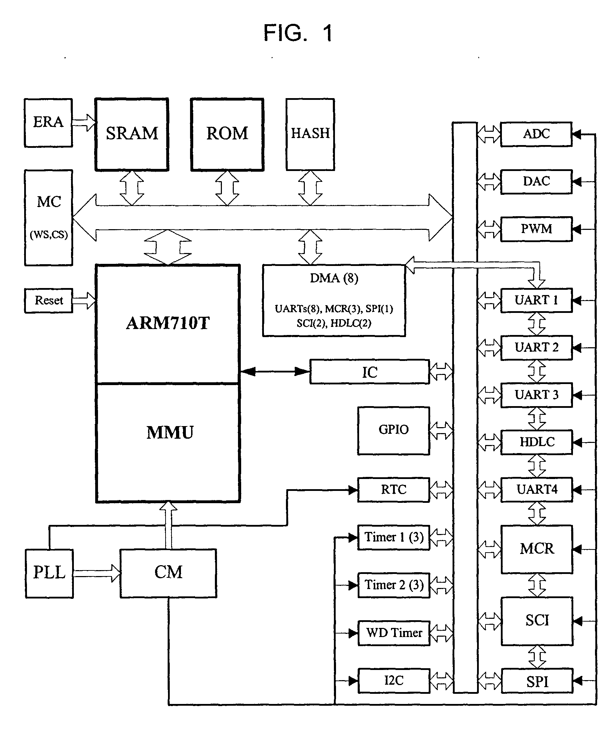

Figure 1 is a functional block diagram of an integrated circuit according to the invention.

One embodiment of an integrated circuit according to the invention is obtained by an integrated circuit comprising the following functional blocks or functionalities:
1. A 32-bit RISC microprocessor forming the motor of the integrated circuit (ARM710T);
2. An interface block between the microprocessor and the outside world basically including the following items (MC):
   - an external 16-bit two-way data bus
   - an external 24 line address bus;
   - interface for external memory, 10 chip select selection outlets, number of wait states and 8 / 16-bit access selectable for each chip select;
   This interface provides for external connection of different types of asynchronous access memories (RAM or Flash) or of additional input-output devices. It is provided with 10 selection outlets (CS), where each outlet covers a memory area of 16 Mbytes. Each selection outlet allows the access speed (WS) and the data bus width (8 or 16 bits) to be parameterized independently, which allows different types of memory or devices to be used, according to their market availability;
3. 18-Kbyte internal read only memory (ROM);
4. 27-Kbyte internal read-write memory (SRAM) which may be externally supplied from a dry cell or battery and which includes a quick erase process in case of detection of external attack (ERA);
5. Accelerator for HASH calculations;
6. Memory management unit (MMU) adjacent the processor. This block may divide the memory into an unlimited number of areas, with the sole practical limitation, in this particular embodiment, that the memory division must have a minimum Kbyte-capacity. This is effected by way of tables stored in the memory itself, which allows an unlimited number of memory partitions to be made.
7. Direct memory access controller (DMA), 8 independent one-way channels which may be dynamically allocated to 16 channels of some of the integrated peripherals. Each channel may be configured to pour data from the memory to the peripheral or, vice versa, from the peripheral to the memory.
   The peripherals which may be connected to a DMA channel are:
   - the 4 reception or the 4 transmission channels of the UARTs;
   - The reception or transmission channel of the synchronous communication channel;
   - the 3 read channels of the magnetic tape tracks;
   - the reception or transmission channel for the smart card controller;
   - the serial-parallel converter.

   The 8 existing DMA channels may be allocated fixedly or dynamically to eight of the 16 possible peripheral channels.
8. Interrupt controller (IC), this block controls all the interrupts generated by all the functional blocks.
9. 32-bit general purpose inlet-outlet (GPIO);
   These 32 circuit pins may be each independently programmed as inlet or outlet. Those indicated as outlet allow the their logic output state to be programmed. Those indicated as inlet may activate a system interrupt and allow a selection to be made between having the interrupt occur on the rising edge or on the descending edge of the input logic signal;
   Some of these 32 pins may also be multiplexed between their use as general purpose inlet-outlet or as specific inlet-outlet for one or another of the functional blocks integrated in the circuit.
10. Eight 8-bit channel analog to digital converter;
   Eight continuous conversion channels from an analog input level to a digital output value with 8-bit resolution;
   Programmable conversion frequency.
11. Digital to analog converter (DAC)
   A digital to analog channel with 8 input bits with continuous conversion output.
12. Wave generator with pulse width control (PWM)
   A variable frequency square wave generator with possibility of programming the ratio of the duration of the portion of the wave to positive logic to the duration of the portion to negative logic.
13. Real time clock which may be supplied externally from a dry cell or battery (RTC)
14. 2 timers with three independent channels each (Timer1, Timer2).
   Three independent channels per timer which may be programmed as periodic timer (cyclic) or countdown timer. Each channel has its own interrupt signal for its system interface.
15. WD timer
16. 4 asynchronous serial communication channels (UART 1, 2, 3, 4).
17. Synchronous communication channel (HDLC)
   Synchronous Uart for the processing of data bursts in HDLC or SDLC format. Comprises automatic detection of headers and tails with CRC in-line calculation.
18. Magnetic card reader suitable for 3 tracks (MCR)
19. Smart card read-write interface which may be internally multiplexed for supporting up to 5 cards at the same time (SCI). The solution provided in this embodiment of integrated circuit, with 4 asynchronous communication channels and with a read-write interface for up to 5 smart cards simultaneously, and where both blocks are independent, allows the simultaneous processing power to be increased.
20. Two-way serial-parallel converter for synchronous serial communications (SPI).
   8-bit serial-parallel converter with possibility of connection to DMA, for synchronous high speed links.
21. Two-way 2-wire serial interface (I2C).
   Interface according to I2C standard for interconnection of multiple external items over a single 2-wire link line.
22. Generator, using an external quartz crystal or oscillator, for the clock frequencies required for operation of the different integrated circuit modules (PLL, CM)
23. Circuit supply controller, with supply break detection (Reset).

The blocks including the microprocessor (ARM710T), the read-write memory (SRAM) and the rapid erase process (ERA) and the clock frequency generator can be protected by attack detection sensors (trepanation, temperature, etc) such as those mentioned above. These blocks are connected over the data bus, the address bus and the memory access control signals: read, write and select.

The quick erase process is based on the external quartz crystal frequency of 32 kHz, whereby the oscillator circuit (PLL) forming part of the clock frequency generator block also is also supplied from two sources.

Once the erase process has initialized, it cannot be halted until the complete process of erasing the 27 Kbytes of memory has terminated. The erase process is effected at a rate of 4 bytes (32 bits) per 32 kHz clock cycle, then at a rate of 31.25 ms per each 4 bytes, which means that complete erasure of the RAM takes up to 216 ms. It is possible to guarantee the compulsory requirement that the critical data may be erased in periods of time of less than 3 ms thanks to the possibility of being able to define the direction of initialization of the erase process. In this way, the zone deemed to be sensitive will be erased first and thereafter the remaining RAM area of conventional use. The erase system is logically cyclic, such that if the process has not been initialized in the first natural position of the memory, when the last position is reached, the process will continue from the first position until it reaches the position where the process was initialized, where it will stop.

The fact that all the items associated with this function are supported by the dual supply is due to the fact of being able to guarantee that if any type of attempt to gain access to the data is detected, erasure thereof may be guaranteed even in the absence of the main supply.

## Claims

1. An integrated circuit comprising at least one microprocessor, an external connection interface, a data bus, an external address bus and at least one additional circuit with predefined functionalities, additionally comprising a battery or dry cell supported data RAM (SRAM), a ROM containing at least one program and public keys, where at least part of said program is a cryptographic algorithm operating with said public keys contained in said ROM.

2. The integrated circuit of claim 1, wherein said RAM is preferably provided with a fast erase circuit (ERA) and at least one attack detector.

3. The integrated circuit of claim 1 or claim 2, wherein said cryptographic algorithm, by means of said public keys, allows the installation and execution only of programs duly authenticated by a private key corresponding to one or another of said public keys.

4. The integrated circuit of at least one of claims 1 to 3, wherein said data bus and said external address bus are disconnected when said microprocessor is accessing said internal ROM and/or said RAM (SRAM).

5. The integrated circuit of at least one of claims 1 to 4, wherein said additional circuits have a functionality comprised in the following group of functionalities: a calculation accelerator (HASH), memory management unit (MMU), direct memory access controller (DMA), interrupt controller (IC), analog to digital converter (ADC), digital to analog converter (DAC), pulse width control wave generator (PWM), real time clock (RTC), timer (Timer 1, Timer 2), software supervisory timer (WD timer), universal asynchronous serial communication channel (UART), synchronous communications channel (HDLC), magnetic card reader (MCR), smart card read/write interface (SCI), two-way serial-parallel converter for synchronous serial communications (SPI), two-wire two-way serial interface (12C), clock frequency generator (PLL), and circuit supply controller, with supply break detection.

6. The integrated circuit of at least one of claims 1 to 5, wherein said memory management unit (MMU) is adapted to divide said RAM (SRAM), said ROM, and, possibly, at least one external memory, into an unlimited number of divisions, such that when a particular program is being executed in one of said divisions, the remaining divisions are totally inaccessible.

7. The integrated circuit of at least one of claims 1 to 6, wherein said smart card read-write interface (SCI) is adapted to support up to 5 cards simultaneously.

8. The integrated circuit of claim 1, comprising a microprocessor, an external connection interface, a data bus, an external address bus, additional circuits having the following predefined functionalities: calculation accelerator (HASH), memory management unit (MMU) adapted to divide said memory into an unlimited number of divisions, direct memory access controller (DMA), interrupt controller (IC), analog to digital converter (ADC), digital to analog converter (DAC), pulse width control wave generator (PWM), real time clock (RTC), timer (Timer 1, Timer 2), software supervisory timer (WD timer), universal asynchronous serial communication channel (UART), synchronous communications channel (HDLC), magnetic card reader (MCR), smart card read/write interface (SCI) adapted to support up to five cards simultaneously, a two-way serial-parallel converter for synchronous serial communications (SPI), two wire two-way serial interface (I2C), clock frequency generator (PLL), a circuit supply controller, with supply break detection, a battery or dry cell supported data RAM (SRAM) and having a fast erase circuit (ERA) and at least one attack detector, and a ROM containing at least one program with a cryptographic algorithm and public keys, where said data bus and said external address bus are disconnected when said internal ROM and/or said RAM (SRAM) are being accessed.

9. Use of a circuit according to at least one of claims 1 to 8 in a security module.
